# EUROPEAN PATENT SPECIFICATION

(11) **EP 0 588 428 B1**
(45) Date of publication and mention of the grant of the patent: **27.03.1996**
(21) Application number: 93202636.2
(22) Date of filing: 10.09.1993
(51) Int. Cl.: A01K 1/06

(54) **Feeding fence**
Fressgitter
Cornadis

(30) Priority: 14.09.1992 NL 9201595
(43) Date of publication of application: 23.03.1994
(73) Proprietor: DE BOER STALINRICHTINGEN B.V., NL-8938 AD Leeuwarden (NL)
(72) Inventor: Doornbosch, Jan Jaap, NL-9254 AJ Hardegarijp (NL)
(74) Representative: 't Jong, Bastiaan Jacobus

(56) References cited:
- EP-A- 0 063 184
- NL-A- 9 000 107
- US-A- 4 476 815
- US-A- 4 867 105
- US-E- 32 728

## Description

The invention relates to a feeding fence of the type as known from US-E-32728.

Such a feeding fence comprises an upper beam and a lower beam having therebetween at least one passage opening for the head of an animal. The passage opening is bounded on one side by a swivel bar which is movable between a position in which the animal can push its head along the swivel bar through the passage opening and a position in which the swivel bar is locked behind the head of the animal.

The swivel bar is capable of swiveling further than this position, whereby sufficient space becomes available at the bottom of the passage opening to allow passage of the head of the animal, in case this animal has lain down while its head is placed through the passage opening. The stop of the swivel bar, which normally bounds the movement thereof to the catching position per feed location, that is, per passage opening, can be moved away individually by hand so that the swivel bar can be moved into the further swivelled position. Although the animal can be released in this manner, it can nevertheless still occur that the person who takes care of the animals notices too late that an animal has lain down or, in a more unfavourable case, has fallen and cannot release itself from the fence. The animal can thereby be further harmed or weakened or, in the worst case, die before assistance arrives.

With the feeding fence according to the invention as characterized in claim 1 this drawback is obviated. When for instance the personnel caring for the animals will be absent for a longer period, the stop means can be shifted into the rest position whereby the swivel bar can swivel freely back and forth and no animal can get caught in the fence.

The step of claim 2 is preferably applied therein, so that, when it is desired to re-place the feeding fence in the normal situation of use, all swivel bars standing in the further swivelled position are automatically carried from this position to the middle position when the stop means are shifted into the active position.

A further favourable step is characterized in claim 3. It has been found that fodder, for instance hay, can be lost because the animals take up a portion of this fodder and then move their head up and downward to shake loose an excess quantity. It occurs herein that the animal moves its head so far upward that the excess fodder is thrown over the fence and is there trampled underfoot. The swivel bar, which is freely movable but which nevertheless stands in the further swivelled, stable position during normal feeding of the animal, forms an obstacle such that this far upward swinging of the head of the animal is prevented.

This effect is reinforced by the step of claim 4 in that the animal is subjected to a greater resistance when it swings its head upward.

The control means for the locking means and the control means for the stop means can take a combined form. A very simple, user-friendly embodiment that is easy to service is however obtained when the step of claim 5 is applied.

A favourable embodiment is herein characterized in claim 6.

The invention will be further elucidated in the following description with reference to the annexed figures, in which:
figures 1-3 show a front view of a portion of a feeding fence according to the invention wherein the swivel bar stands respectively in the further swivelled position, the open position and the catching position;
figure 4 is a partly broken away perspective view according to arrow IV in figure 3.

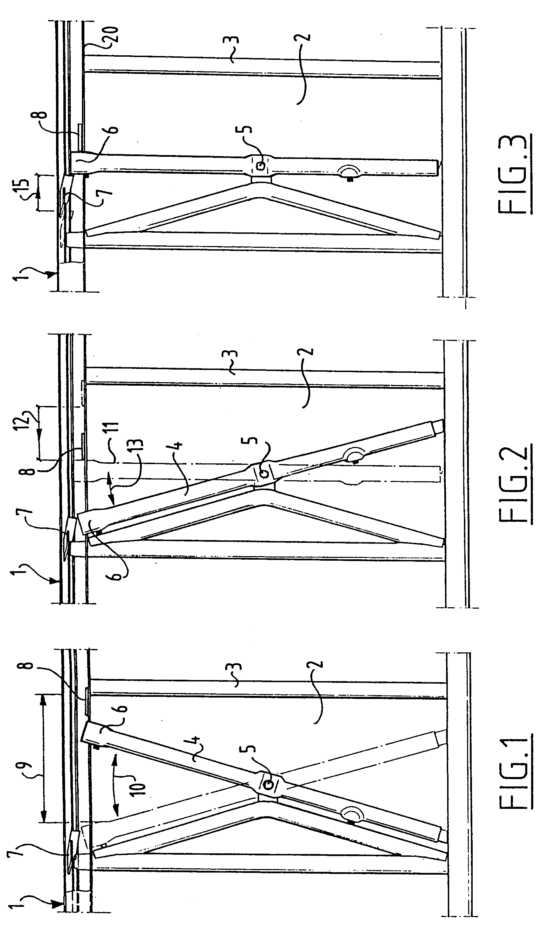

The fence 1 shown in the figures comprises an upper beam and a lower beam and tubular bars arranged therebetween. The beam 3 forms an edge fence part bounding a passage opening 2 on the right-hand side as seen in the figures. The passage opening 2 is bounded on the other side by a swivel bar 4 which is mounted for swivelling approximately in the centre by means of a hinge 5. As shown in figure 1, the swivel bar 4 can swivel reciprocally in relation to a vertical centre position.

In the position drawn in figure 1 with dashed lines an animal can push its head along the upper portion of swivel bar 4 and, as it moves downward, will be able to move swivel bar 4 into the position drawn with full lines. When it moves upward again the bar swivels back again, and so on.

In the embodiment shown the end 6 of swivel bar 4 is flattened and protrudes into a slot in an underside of the upper profile 20.

Mounted in this upper profile 20 are locking means which comprise a lock 7 for each swivel bar 4 and stop means which comprise a stop 8 for each swivel bar 4. The stop 8 can be moved out of the rest position shown in figure 1, wherein it is situated close to the top end 6 of the swivel bar 4 when this latter stands in the further swivelled position, to an active position as shown in figure 2 by displacing the stop over the distance 12 shown in figure 2. After this shifting of the stop 8 into the active position the stroke of the swivel bar 4 designated with 10 in figure 1 is limited to the stroke designated by 13 in figure 2.

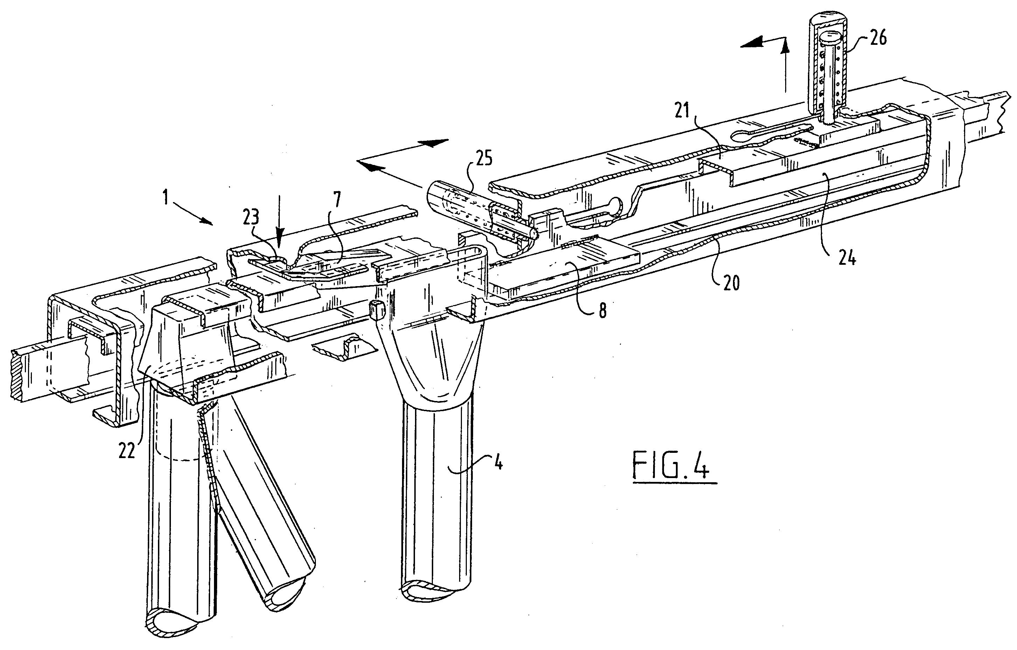

When the locking means are then operated such that the lock 7 is shifted to the right over the distance 15 shown in figure 3, the swivel bar 4 can be locked in the middle position shown in figure 3 when the swivel bar is turned to the right from the open position of figure 2, for instance because an animal pushes its head into opening 2 and presses with its neck against the bottom end of swivel bar 4. The animal can thereafter be freed by again sliding the lock 7 back over the distance 15 or can be individually released by raising the lock 7 by pressing on a protruding portion of the lock 7 via the opening 23 shown in figure 4.

In the embodiment shown the swivel bar 4 has two stable positions which are shown in figure 1 in dashed lines and full lines. When the animal pushes its head through opening 2 and moves it downward to take up fodder, the swivel bar will move into the position drawn in full lines. Should the animal now wish to throw its head upward to shake loose excess fodder its neck comes up against the upper portion of swivel bar 4. This obstructs the animal such that it will limit the up and downward movement of its head so that fodder will no longer be thrown over the fence 1 to the walking side and be there trodden underfoot.

During normal operation the feeding fence can be placed in the position of figure 1. When it is desired to catch one or more animals or to prevent waste of fodder because the animals take a mouthful of fodder and then withdraw their head through opening 2, the position shown in figure 3 can be used. Initially the swivel bars 4 will herein stand in the position shown in figure 2 and, after activation by an animal, move into the locked position shown in figure 3.

In order to move from the position of figure 1 into that of figure 2 respectively figure 3, all swivel bars standing in the further swivelled position will have to be shifted back to at least the middle position.

This takes place simultaneously with the displacing of the stops 8 in that the construction is such that the end 6 of the swivel bar protrudes into the path covered by the stop 8 from the rest position to the active position. The stop 8 thereby carries with it the swivel bar 4.

As shown in figure 4, the locks 7 are arranged in a slidable control rod 21 which is laid on supports 22 which are arranged at the position of fixed bars of the fence. The sliding rod 21 can be moved using the control handle 26 comprising a sleeve which is movable upward counter to a spring and which can engage in two positions into openings in the upper part of profile 20.

A similar construction is applied for moving the locks 8. The locks 8 are arranged on a sliding rod 24 which can be shifted reciprocally by means of a control handle 25.

As can be seen, the sliding rod 24 and the sliding rod 21 are free of each other so that they can be moved independently. Because two control rods are used, a very simple, easily operated construction is obtained which is maintenance-free.

## Claims

1. Feeding fence comprising an upper beam (20) and a lower beam having therebetween at least one passage opening (2) for the head of an animal, which passage opening (2) is bounded on one side by an edge fence part (3) defining a vertical edge and on the opposite side by a swivel bar (4) which at a location between its outer ends is mounted for swivelling on a swivel shaft (5) lying transversely of the fence such that the swivel bar (4) can swivel out of a middle position substantially parallel to the edge fence part into an open position in which the upper portion of the swivel bar (4) is removed from the edge fence part (3) and a further swivelled position in which the lower portion of the swivel bar is removed from the edge fence part (3), wherein in the upper (20) or lower beam are arranged locking means (7) with first control means (21, 26) therefor for locking the swivel bar (4) in the middle position and stop means (8) against which the swivel bar (4) lies in the middle position and second control means (24, 25) which are connected to the stop means (8) for each swivel bar (4) **characterized in that** the second control means enable the stop means (8) to be shifted from an active position close to the middle position to a rest position close to the further swivelled position of the swivel bar (4).

2. Feeding fence as claimed in claim 1, wherein the end of the swivel bar (4) co-acting with the stop (8) protrudes in the further swivelled position into the path described by the stop means (8) during the movement thereof from the rest position to the active position.

3. Feeding fence as claimed in claim 1 or 2, wherein the hinge point (5) of the swivel bar (4) engages at a location such that both the open position and the further swivelled position are stable positions.

4. Feeding fence as claimed in claim 1 or 2, wherein the hinge point of the swivel bar (4) engages at a location such that only the further swivelled position is a stable position.

5. Feeding fence as claimed in any of the foregoing claims, wherein the second control means (24, 25) for the stop means (8) are independent of the first control means (21, 16) for the locking means (7).

6. Feeding fence as claimed in any of the foregoing claims, wherein the second control means for the stop means is a sliding control rod received in the upper (20) or lower beam.

## Patentansprüche

1. Freßgitter mit einem oberen Balken (20) und einem unteren Balken, wobei dazwischen mindestens eine Durchgangsöffnung (2) für den Kopf eines Tieres vorgesehen ist, welche Durchgangsöffnung (2) an einer Seite durch ein Gitterkantenteil (3), das eine vertikale Kante definiert, und an der gegenüberliegenden Seite durch eine Schwenkstange (4) begrenzt ist, die an einer Stelle zwischen ihren äußeren Enden zum Schwenken auf einer Schwenkwelle (5) angebracht ist, die quer zu dem Gitter derart liegt, daß die Schwenkstange (4) aus einer Mittelposition im wesentlichen parallel zu dem Gitterkantenteil in eine offene Position, in der der obere Abschnitt der Schwenkstange (4) von dem Gitterkantenteil (3) entfernt ist, und in eine weitergeschwenkte Position, in der der untere Abschnitt der Schwenkstange von dem unteren Teil des Gitterkantenteiles (3) entfernt ist, geschwenkt werden kann, wobei in dem oberen (20) oder unteren Balkenverriegelungsmittel (7) mit ersten Steuermitteln (21, 26) dafür zum Verriegeln der Schwenkstange (4) der Mittelposition und Stoppmittel (8), an denen die Schwenkstange (4) in der Mittelposition anliegt, und zweite Steuermittel (24, 25), die mit jedem Stoppmittel (8) für jede Schwenkstange (4) verbunden sind, angeordnet sind,
dadurch gekennzeichnet, daß die zweiten Steuermittel den Stoppmitteln (8) ermöglichen, von einer aktiven Position nahe der Mittelposition zu einer Ruheposition nahe der weitergeschwenkten Position der Schwenkstange (4) verschoben zu werden.

2. Freßgitter wie in Anspruch 1 beansprucht, bei dem das Ende der Schwenkstange (4), die mit dem Anschlag (8) zusammenwirkt, in der weitergeschwenkten Position in den Weg vorsteht, der durch das Stoppmittel (8) während seiner Bewegung von der Ruheposition zu der aktiven Position zurückgelegt wird.

3. Freßgitter wie in Anspruch 1 oder 2 beansprucht, bei dem der Drehpunkt (5) der Schwenkstange (4) an einer solchen Position in Eingriff steht, daß sowohl die offene Position und die weitergeschwenkte Position stabile Positionen sind.

4. Freßgitter wie in Anspruch 1 oder 2 beansprucht, bei dem der Drehpunkt der Schwenkstange (4) an solch einer Position in Eingriff steht, daß nur die weitergeschwenkte Position eine stabile Position ist.

5. Freßgitter wie in einem der vorhergehenden Ansprüche beansprucht, bei dem die zweiten Steuermittel (24, 25) für die Stoppmittel (8) unabhängig von den ersten Steuermitteln (21, 26) für die Verriegelungsmittel (7) sind.

6. Freßgitter wie in einem der vorhergehenden Ansprüche beansprucht, bei dem die zweiten Steuermittel für die Stoppmittel eine gleitende Steuerstange sind, die in dem oberen (20) oder unteren Balken aufgenommen ist.

## Revendications

1. Barrière d'affouragement comprenant un montant supérieur (20) et un montant inférieur ménageant, entre eux, au moins un passage (2) pour la tête d'un animal, passage (2) qui est limité, d'un côté, par une partie de barrière de bordure (3) définissant un bord vertical et, du côté opposé, par une barre pivotante (4) qui, en un point situé entre ses extrémités extérieures, est monté afin de pouvoir pivoter sur un axe de pivotement (5) transversal par rapport à la barrière, de telle sorte que la barre pivotante (4) puisse pivoter hors d'une position médiane sensiblement parallèle à la partie de barrière de bordure, dans une position ouverte dans laquelle la partie supérieure de la barre pivotante (4) est dégagée de la partie de barrière de bordure (3), et dans une position pivotée extrème dans laquelle la partie inférieure de la barre pivotante est dégagée de la partie de barrière de bordure (3), dans laquelle sont montés, dans le montant supérieur (20) ou dans le montant inférieur, des moyens de verrouillage (7) pourvus de premiers moyens de commande (21, 26) destinés à verrouiller la barre pivotante (4) dans la position médiane, et des moyens formant butoir (8) contre lesquels la barre pivotante (4) repose dans la position médiane, et des deuxièmes moyens de commande (24, 25) qui sont reliés aux moyens formant butoir (8) pour chaque barre pivotante (4), caractérisée en ce que les deuxièmes moyens de commande permettent aux moyens formant butoir (8) d'être déplacés d'une position active proche de la position médiane dans une position de repos proche de la position pivotée extrème de la barre pivotante (4).

2. Barrière d'affouragement selon la revendication 1, dans laquelle l'extrémité de la barre pivotante (4) coopérant avec le butoir (8) dépasse, dans la position pivotée extrème, dans la trajectoire décrite par les moyens formant butoir (8) lors du déplacement de celui-ci de la position de repos dans la position active.

3. Barrière d'affouragement selon la revendication 1 ou 2, dans laquelle la charnière (5) de la barre pivotante (4) est montée en un point tel que la position ouverte et la position pivotée extrème soient des positions stables.

4. Barrière d'affouragement selon la revendication 1 ou 2, dans laquelle la charnière (5) de la barre pivotante (4) est montée en un point tel que seule la position pivotée extrème soit une position stable.

5. Barrière d'affouragement selon l'une quelconque des revendications précédentes, dans laquelle les deuxièmes moyens de commande (24, 25) destinés aux moyens formant butoir (8) sont indépendants des premiers moyens de commande (21, 16) destinés aux moyens de verrouillage (7).

6. Barrière d'affouragement selon l'une quelconque des revendications précédentes, dans laquelle les deuxièmes moyens de commande destinés aux moyens formant butoir sont constitués par une tige de commande coulissante logée dans le montant supérieur (20) ou inférieur.
